# EUROPÄISCHE PATENTSCHRIFT

(11) **EP 1 744 444 B1**
(45) Veröffentlichungstag und Bekanntmachung des Hinweises auf die Patenterteilung: **12.09.2007**
(21) Anmeldenummer: 05015194.3
(22) Anmeldetag: 13.07.2005
(51) Int. Cl.: H02P 3/08, H02P 3/10, H02P 3/14, F03D 7/02, H02P 7/00, H02P 7/28

(54) **Rotorblattverstellungsvorrichtung**
Rotor blade pitch adjustment apparatus
dispositif de réglage du pas pour pale de rotor

(43) Veröffentlichungstag der Anmeldung: 17.01.2007
(73) Patentinhaber: REpower Systems AG, 22335 Hamburg (DE)
(72) Erfinder: Letas, Heinz-Hermann, Dr., Gross Meinsdorf 23701 Süsel (DE)
(74) Vertreter: Glawe, Delfs, Moll

(56) Entgegenhaltungen:
- DE-A1- 10 253 811
- GB-A- 558 914
- US-A- 4 910 443

## Beschreibung

Windenergieanlagen sind üblicherweise mit Rotoren ausgerüstet, deren Blätter verstellbar sind. Mittels einer Verstellvorrichtung kann der Anstellwinkel der Rotorblätter in Bezug auf die Rotornabe und damit in Bezug auf den einfallenden Wind verändert werden. Die Blattverstellvorrichtung umfasst ein Blattlager, einen Blattverstellantrieb sowie eine entsprechende Steuerungseinrichtung. Die Energieversorgung der Blattverstellungsvorrichtung erfolgt aus dem erzeugten Netzstrom oder bei Netzausfall aus Akkumulatoren.

Aus Sicherheitsgründen müssen Windenergieanlagen so eingerichtet sein, dass sie im Notfall schnell zum Stillstand gebracht werden können. Das ist nicht nur dann von Bedeutung, wenn übermäßig starke Winde herrschen, sondern auch dann, wenn Teile der Anlage oder der Anlagensteuerung ausfallen sollten. In Bezug auf den Rotor bedeutet dies, dass er in eine Fahnenstellung zu bringen ist. Im Regelbetrieb erfolgt dies mittels des Blattverstellantriebs und seiner Regelung. Im Notbetrieb kann nicht davon ausgegangen werden, dass die Regelung bzw. die Netzversorgung noch in vollem Umfang zur Verfügung steht. Der Blattverstellantrieb muss daher so ausgebildet sein, dass auch im ungeregelten Notbetrieb schnell und sicher die Rotorblätter in Fahnenstellung verfahren werden. Aus Gründen der Sicherheit und der Stabilität sollen dabei bestimmte Verstellgeschwindigkeiten nicht überschritten werden.

Bei vorbenutzten Windenergieanlagen hat sich die Schwierigkeit ergeben, dass der Verstellantrieb unter bestimmten Bedingungen im ungeregelten Notbetrieb mit einer zu hohen Geschwindigkeit läuft. Das kann zu sehr hohen Turmkopfbelastungen durch negativen Rotorschub mit der Gefahr einer Beschädigung der Windenergieanlage führen. Zur Begrenzung der Verstellgeschwindigkeiten ist vorgeschlagen worden, sogenannte Compound-Antriebe (Doppelschlussmotoren) einzusetzen (DE 102 53 811 A1). Bei diesen können aber elektrische Instabilitäten oberhalb der Leerlaufdrehzahl auftreten.

Zur Notverstellung ist es bekannt, einen Verstellantrieb, umfassend zwei Elektromotoren und einen Fliehkraftschalter, vorzusehen (DE 297 22 109 U1). Einer der beiden Elektromotoren ist ein Eilgang-Verstellmotor, der oberhalb einer Grenzdrehzahl des Windrotors mittels des Fliehkraftschalters eingeschaltet wird. Weiter ist es bekannt, die zur Betätigung des Verstellantriebs erforderliche elektrische Energie mittels gesonderter Generatoren zu gewinnen (DE 100 09 472 C2 und DE 196 44 705 A1). Weiterhin ist es bekannt, in der Rotornabe einen Hilfsgenerator anzuordnen, der einen dort herkömmlicherweise angeordneten Akkumulator überflüssig macht (DE 200 20 232 U1).

Ausgehend von einer Windenergieanlage mit einer Blattverstelleinrichtung gemäß dem zuerst erwähnten Dokument liegt der Erfindung die Aufgabe zu Grunde, eine Rotorblattverstellungsvorrichtung der eingangs genannten Art derart zu verbessern, dass die Stabilität im ungeregelten Notbetrieb erhöht ist.

Die erfindungsgemäße Lösung liegt in einer Windenergieanlage mit den Merkmalen des Anspruchs 1. Sie liegt ferner in einem Verfahren zum Betrieb der Windenergieanlage mit den Merkmalen des Anspruchs 10.

Erfindungsgemäß ist bei einer Windenergieanlage umfassend einen Rotor mit verstellbaren Blättern, einer Verstelleinrichtung für die Blätter mit einem Stellmotor, der mindestens eine Erregungswicklung aufweist, und einem Blattsteuerungsmodul und einem vom Rotor angetriebenen Generator, wobei die Verstelleinrichtung in einem Normalbetrieb und in einem Notbetrieb betreibbar ist, wobei in dem Normalbetrieb der Stellmotor von dem Blattsteuerungsmodul geregelt wird und in dem Notbetrieb der Stellmotor ungeregelt ist, vorgesehen, dass die Verstelleinrichtung mit einer Drehmomentschwächungseinrichtung versehen ist, die dazu ausgebildet ist, im Notbetrieb durch Reduktion des magnetischen Flusses in der Erregerwicklung selbsttätig ein Schleppmoment des Stellmotors zu vermindern.

Die Erfindung hat erkannt, dass ein Grund für im Stand der Technik auftretende Instabilitäten beim Verfahren der Blätter in eine sichere Stellung beim Notbetrieb in Überdrehzahlen des Verstellmotors zu suchen ist. Die Erfindung hat weiter erkannt, dass solche Überdrehzahlen insbesondere dann auftreten, wenn die Blätter des Rotors sich unter der Einwirkung von aerodynamischen Kräften oder Trägheitskräften schneller verstellen, als durch die Drehzahl des Verstellmotors vorgegeben. In dieser Situation, wie sie insbesondere unter der Einwirkung hoher Windstärken auftreten kann, wirkt der Verstellmotor in an sich durchaus gewünschter Weise als generatorische Bremse gegenüber einer zu schnellen Verstellung der Blätter des Rotors. Herkömmlicherweise führte dies aber zu Instabilitäten. Die Erfindung hat nun erkannt, dass diese Instabilitäten dadurch beseitigt werden können, dass in dem Fall, dass der Verstellmotor als Bremse wirkt, das von ihm auf die Blätter des Rotors ausgeübte Drehmoment (Schleppmoment) verringert wird.

Dies wird erreicht, indem der von der Erregungswicklung erzeugte magnetische Fluss reduziert bzw. zu Null gesetzt wird. Der Verstellmotor erhält damit in diesem Betriebsbereich die Charakteristik einer schwächer erregten Maschine. Drehzahlschwankungen werden dadurch beim Übergang in den geschleppten Betrieb verringert, das aus Stellmotor und Rotorblättern bestehende System neigt weniger zu schädlichen Schwingungen. Die Betriebssicherheit der Anlage erhöht sich damit. Die Gefahr von strukturellen Überlastungen der mechanischen Struktur verringert sich, was insbesondere bei leistungsstärkeren Windenergieanlagen im Megawattbereich einen erheblichen Vorteil darstellt.

### Nachfolgend werden einige verwendete Begriffe erläutert:

Unter dem Schleppmoment wird das von dem Stellmotor aufgenommene Drehmoment verstanden, das er als generatorisch wirkende Bremse aufnimmt.

Unter einer Reserveenergiespeichereinrichtung wird eine Einrichtung verstanden, die zur Eigenversorgung der Windenergieanlage im Notbetrieb erforderliche Energie speichert und während des Notbetriebs abgibt. Hierbei kann es sich insbesondere um eine Akkumulatoreinrichtung handeln.

Zweckmäßigerweise ist die Drehmomentschwächungseinrichtung dazu ausgebildet, einen durch die Erregungswicklung des Stellmotors laufenden Erregungsstrom zu verringern. Mit dem verringerten Strom verringert sich die von der Erregungswicklung erzeugte magnetische Flussdichte, wodurch sich das Drehmoment des Stellmotors ebenfalls verringert. Vorzugsweise ist dazu die Drehmomentschwächungseinrichtung als Freilaufeinrichtung ausgebildet, die bei geschlepptem Stellmotor die Erregungswicklung überbrückt. Damit wird ein besonders einfacher und betriebssicherer Aufbau ermöglicht, bei dem die Drehmomentschwächungseinrichtung autark arbeiten kann, d.h. ohne von dem Blattsteuerungsmodul oder einer anderen übergeordneten Steuerungseinheit abhängig zu sein. Eine solche Freilaufeinrichtung ist damit eine verblüffend einfache Ausführungsform für eine erfindungsgemäße Drehmomentschwächungseinrichtung, die Vorteile bezüglich eines geringen Aufwands werden mit hoher Betriebssicherheit verknüpft. Vorteilhafterweise ist die Erregungswicklung als Reihenschlusswicklung ausgeführt. Dies hat den Vorteil, dass im Schleppbetrieb der wirksame Widerstand, der Widerstand der durch die Ankerwicklung und durch die Reihenschlusswicklung gebildet ist, verringert wird. Je größer die Verminderung ausfällt, um so steifer wird die Drehmoment-Drehzahl-Bremskennlinie und damit der Schutz vor schädlicher Überdrehzahl. Mit Vorteil ist der Stellmotor als Doppelschlussmotor ausgeführt. Er weist außer der Reihenschlusswicklung noch eine Nebenschlusswicklung auf. Sie bestimmt unabhängig von dem gegenwärtigen elektrischen Betriebszustand und dem durch die Reihenschlusswicklung fließenden Strom eine nominale Leerlaufdrehzahl des Stellmotors, d.h. sie bestimmt seine Enddrehzahl. Sie bildet damit einen Schutz gegen ein Durchgehen des Stellmotors. Dazu ist vorzugsweise vorgesehen, dass die Nebenschlusswicklung nicht durch die Drehmomentschwächungseinrichtung überbrückt ist.

Die Freilaufeinrichtung kann auf verschiedene Weise ausgebildet sein. Eine Möglichkeit ist es, sie als Rückstromrelais auszubilden. Dieses ist so ausgebildet, dass bei negativem Strom, d.h. der Stellmotor wird geschleppt und wirkt als generatorische Bremse, ein Kontakt so betätigt wird, dass der durch die Erregungswicklung, vorzugsweise die Reihenschlusswicklung, fließende Strom vermindert wird. Der Vorteil des Relais ist, dass an seinem Schaltzustand der jeweilige Betriebszustand, ob eine Drehmomentschwächung erfolgt oder nicht, klar und eindeutig abgelesen werden kann. Es kann aber auch vorgesehen sein, die Freilaufeinrichtung als eine Diode auszuführen. Dies hat den Vorteil, dass ein besonders einfacher Aufbau ermöglicht ist. Weiter hat eine Diode als Freilaufeinrichtung den Vorzug, dass sie einen gewissen Mindeststrom durch die Erregungswicklung lässt, der je nach Charakteristik der Diode unterschiedlich wählbar ist. Beispielsweise können dazu mehrere Dioden in Reihe geschaltet werden.

Bei einer bevorzugten Ausführungsform ist der Erregerstrom über einen Gleichrichter an die Erregungswicklung geführt, wobei eine Speiseleitung für den Notbetrieb zumindest mit einem Pol gleichstromseitig an dem Gleichrichter angeschlossen ist. Auf diese Weise kann eine der zur Gleichrichtung des Erregungsstroms im Normalbetrieb ohnehin vorhandenen Dioden als Freilaufeinrichtung für den Notbetrieb verwendet werden. Mit dieser verblüffend einfachen Schaltung kann die erfindungsgemäße Drehmomentschwächung bewirkt und sämtliche damit verbundenen Vorteile realisiert werden, ohne dass zusätzliche Bauteile erforderlich sind.

Die Erfindung bezieht sich weiter auf ein Verfahren zum Ändern des Verstellwinkels von Blättern eines Rotors für Windenergieanlagen mittels eines Stellmotors, der im Normalbetrieb von einem Blattsteuermodul geregelt wird und in einem Notbetrieb ungeregelt betätigt wird, mit den Schritten: Zuführen von elektrischer Energie an eine Erregungswicklung des Stellmotors über eine Notspeiseleitung im Notbetrieb, Fahren der Blätter in eine vorbestimmte Stellung, wobei eine Drehmomentschwächungseinrichtung im Notbetrieb betätigt wird, die bei geschlepptem Stellmotor durch Reduktion des magnetischen Flusses in der Erregerwicklung dessen Schleppmoment verringert.

Zur weiteren Erläuterung wird auf obige Ausführungen verwiesen.

Vorteilhafte Weiterbildungen sind Gegenstand der abhängigen Ansprüche.

Die Erfindung wird nachfolgend unter Bezugnahme auf die beigefügten Zeichnungen erläutert, in denen ein vorteilhaftes Ausführungsbeispiel der Erfindung dargestellt ist. Es zeigen:
- Fig. 1: ein Ausführungsbeispiel der Erfindung in einem elektrischen Ersatzschaltbild;
- Fig. 2: eine schematisierte Darstellung des in Fig. 1 dargestellten ersten Ausführungsbeispiels;
- Fig. 3: eine Fluss-Ankerstrom-Kennlinie des Ausführungsbeispiels; und
- Fig. 4: eine Drehzahl-Ankerstrom-Kennlinie des Ausführungsbeispiels.

Eine erfindungsgemäße Windenergieanlage gemäß dem Ausführungsbeispiel umfasst einen Rotor 2 mit mehreren (im Beispiel sind es drei) verstellbar angeordneten Blättern 3, der einen Generator 1 zur Erzeugung elektrischer Energie antreibt. Der Generator 1 ist in an sich bekannter Weise in einem Maschinengehäuse angeordnet, das auf eine turmartige Struktur gesetzt ist. Der Generator 1 ist ebenfalls in an sich bekannter Weise über einen Energiewandler, z.B. einen Wechselrichter, mit einem elektrischen Stromnetz verbunden. Zur Steuerung der Anlage dient eine Betriebssteuereinrichtung. Deren Aufbau und Funktionsweise sind bekannt und brauchen hier nicht weiter erläutert zu werden.

Die Blätter 3 des Rotors sind bezüglich ihres Anstellwinkels θ gemessen zur Drehachse des Rotors verstellbar. Dafür ist für jedes der Blätter 3 eine Verstelleinrichtung 4 angeordnet. Sie umfasst einen Stellmotor 5 mit einem Verstellgetriebe und ein Blattsteuerungsmodul 6. Zur Verbindung des Blattsteuerungsmoduls 6 mit dem elektrischen Stellmotor 5 sowie mit der übergeordneten Betriebssteuereinrichtung sind verschiedene elektrische Schaltelemente vorgesehen, die nachfolgend näher beschrieben werden.

Das Blattsteuerungsmodul 6 ist zum Betrieb in zwei Betriebsarten ausgebildet. Die eine ist ein Normalbetrieb, in dem die Windenergieanlage betrieben wird zum Erzeugen elektrischen Stroms aus der Windenergie. Der Normalbetrieb wird kontrolliert von der Betriebssteuereinrichtung (nicht dargestellt). Die andere Betriebsart ist ein Notbetrieb, in dem die Windenergieanlage unter bestimmten Bedingungen in einen sicheren Betriebszustand gebracht wird. Das bedeutet, dass der Rotor 2 zum Stillstand gebracht wird und die Blätter 3 in eine Fahnenstellung gebracht werden. Das dient nicht nur zum Schutz der Windenergieanlage vor Beschädigungen bei Starkwind, sondern auch als Schutzmaßnahme gegenüber einem Durchgehen der Anlage bei Ausfall wichtiger Betriebstechnik, insbesondere der Betriebssteuerungseinrichtung. Damit der Notbetrieb auch dann durchgeführt werden kann und die Windenergieanlage in ihren sicheren Zustand versetzt werden kann, wenn aufgrund einer Störung keine Verbindung mit dem Stromnetz mehr besteht, weist die Windenergieanlage eine eigene Reserveenergiespeichereinrichtung auf. Sie ist als eine Akkumulatoreinrichtung 10 ausgeführt, die von der Betriebssteuerungseinrichtung (nicht dargestellt) im normalen Betrieb geladen wird, so dass ausreichend Energie für einen Notbetrieb stets zur Verfügung steht.

Damit die Blätter 3 des Rotors ihre Fahnenstellung auch dann erreichen können, wenn Teile der Windenergieanlage, insbesondere Teile der Steuerungseinrichtung, ausgefallen sind, ist ein autarker Betrieb erforderlich. Dazu ist der Stellmotor 5 so geschaltet, dass die Blätter 3 auch im ungeregelten Betrieb des Stellmotors 5 in einer sicheren Geschwindigkeit in ihre Fahnenstellung verfahren werden.

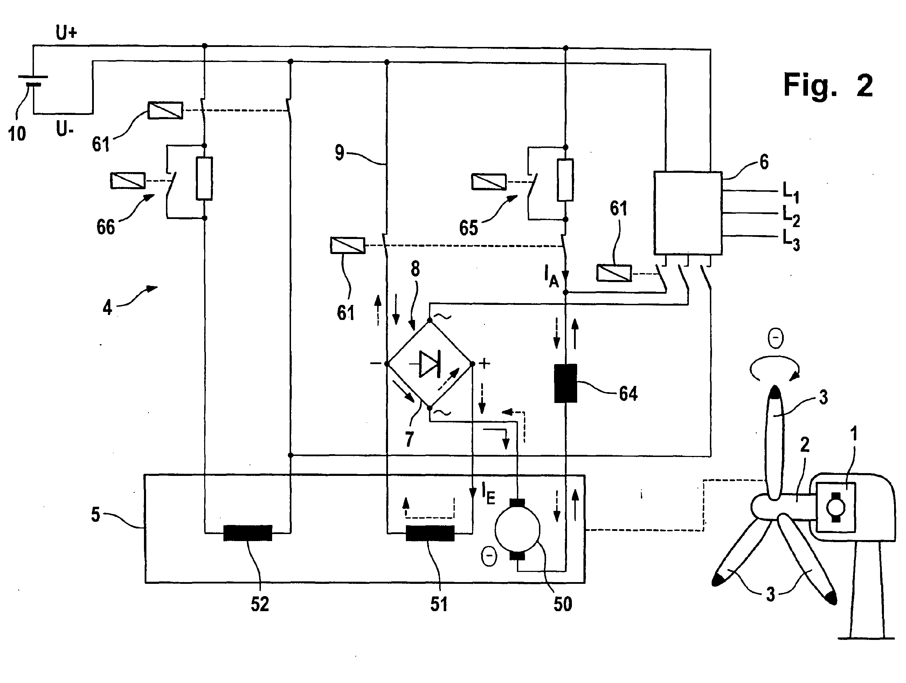

Der Stellmotor 5 ist als Doppelschlussmotor (sog. Compound-Motor) ausgebildet. Er umfasst einen Anker mit einer Ankerwicklung 50, einer Erregungswicklung (fortan als Reihenschlusswicklung 51 bezeichnet) sowie einer Nebenschlusswicklung 52. Der Anker ist über das Verstellgetriebe (nicht dargestellt) mechanisch so mit jeweils einem Blatt 3 verbunden, dass der Anstellwinkel θ beim Betätigen des Stellmotors 5 verändert wird. Die Verstelleinrichtung 4 umfasst ferner das bereits erwähnte Blattsteuerungsmodul 6. Es ist über eine Motordrossel 64 und einen Gleichrichter 8 mit der Ankerwicklung 50 und der Reihenschlusswicklung 51 verbunden. Zur Energieversorgung sind an dem Blattsteuerungsmodul 6 bis zu drei Phasen vom Stromnetz für den Normalbetrieb sowie die beiden Pole einer Akkumulatoreinrichtung 10 für den Notbetrieb angeordnet. Zum Umschalten zwischen Normalbetrieb und Notbetrieb dienen eine Mehrzahl von Schaltrelais 61. In Fig. 2 sind sie in der Stellung dargestellt, die sie im Notbetrieb einnehmen.

Ausgehend von dem positiven Pol U+ der Akkumulatoreinrichtung 10 fließt ein Ankerstrom durch eine Anlasseinrichtung 65 umfassend einen Vorwiderstand sowie ein Überbrückungsrelais, einen Arbeitskontakt des Schaltrelais 61 und eine Induktivität als Motordrossel 64 in die Ankerwicklung 50 des Stellmotors 5. Aus dieser fließt der Ankerstrom an einen Wechselstromanschluss eines in Diodentechnik ausgeführten Gleichrichters 8, dessen anderer Wechselstromanschluss an das Blattsteuerungsmodul 6 über einen im Notbetrieb geöffneten Schaltkontakt des Schaltrelais 61 geführt ist. An den positiven und negativen Anschlüssen des Gleichrichters 8 ist die Reihenschlusswicklung 51 angeschlossen. Am negativen Anschluss ist weiter über einen Schaltkontakt des Schaltrelais 61 und eine Speiseleitung 9 der negative Anschluss U- der Akkueinrichtung 10 angeschlossen. Der Stromfluss (I_{A}) im Motorbetrieb ist durch gestrichelte Pfeile dargestellt.

Die Nebenschlusswicklung 52 ist mit einer Seite über einen Schaltkontakt des Schaltrelais 61 und einer aus Vorwiderstand und Überbrückungsrelais bestehenden Feldschwächungseinrichtung 66 mit dem positiven Anschluss U+ der Akkumulatoreinrichtung 10 verbunden, während die andere Seite der Nebenschlusswicklung 52 über einen anderen Arbeitskontakt des Schaltrelais 61 mit dem negativen Anschluss U- der Akkumulatoreinrichtung 10 und über einen im Notbetrieb geöffneten Arbeitskontakt mit dem Blattsteuerungsmodul 6 verbunden ist.

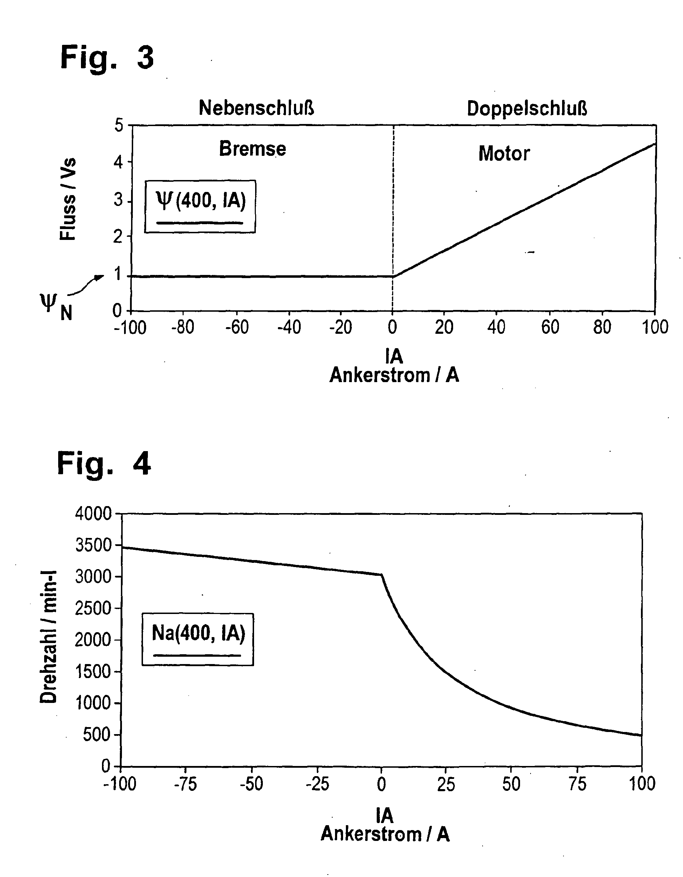

Beim Betätigen des Schaltrelais 61 fließt Strom vom Anschluss U+ der Akkumulatoreinrichtung 10 einerseits durch die Nebenschlusswicklung 52 und erzeugt damit einen Erregungsfluss und andererseits fließt ein (positiver) Ankerstrom über die Motordrossel 64, die Ankerwicklung 50 und weiter über einen Ast des Gleichrichters 8 als Erregungsstrom durch die Reihenschlusswicklung 51 und schließlich zum anderen Anschluss U- der Akkumulatoreinrichtung 10. Die elektrischen Bauteile und die Auslegung des Stellmotors 5 sind so gewählt, dass sich eine gewünschte Verstellgeschwindigkeit des Stellmotors 5 ergibt. Der Stellmotor 5 bewegt beispielsweise das Rotorblatt 3 mit einer Geschwindigkeit von 8°/Sek. in die Fahnenstellung. Treten dabei Störungen auf, wie bspw. aerodynamische Lasten, die das Rotorblatt 3 in die Fahnenstellung zu verdrehen suchen, so wird der Stellmotor 5 entlastet, wobei der Stellmotor 5 als generatorische Bremse wirken kann. Die Flussrichtung des Ankerstroms I_{A} dreht sich dabei um (durch einen ausgezogenen Pfeil in Fig. 2 dargestellt), so dass der (negative) Ankerstrom durch die Motordrossel 64 über die Ankerwicklung 50 zu dem einen Wechselstromanschluss des Gleichrichters 8 fließt. Die den negativen Anschluss des Gleichrichters 8 mit diesem Wechselstromanschluss verbindende Diode fungiert hierbei nun als Freilaufeinrichtung 7 und führt den Strom an der Reihenschlusswicklung 51 vorbei über die Speiseleitung 9 zum anderen Anschluss der Akkumulatoreinrichtung 10. Die Reihenschlusswicklung 51 ist damit beim generatorischen Bremsen überbrückt. Der wirksame Widerstand vermindert sich dadurch etwa auf die Hälfte. Der wirksame Widerstand für den Ankerstrom ist definiert als die Summe der Wicklungswiderstände (Ankerwicklung 50, Reihenschlusswicklung 51) im Stromkreis des Ankerstroms I_{A}. Die Reihenschlusswicklung 51 erzeugt keinen magnetischen Fluss mehr, auf die Ankerwicklung 50 wirkt nur noch der konstante, von der Nebenschlusswicklung 52 bewirkte, Fluss ein (siehe Fig. 3). Die Drehzahl des Stellmotors 5 wird damit stabilisiert (siehe Fig. 4). Überdrehzahl und damit der Gefahr von Instabilitäten wird auf diese Weise entgegengewirkt.

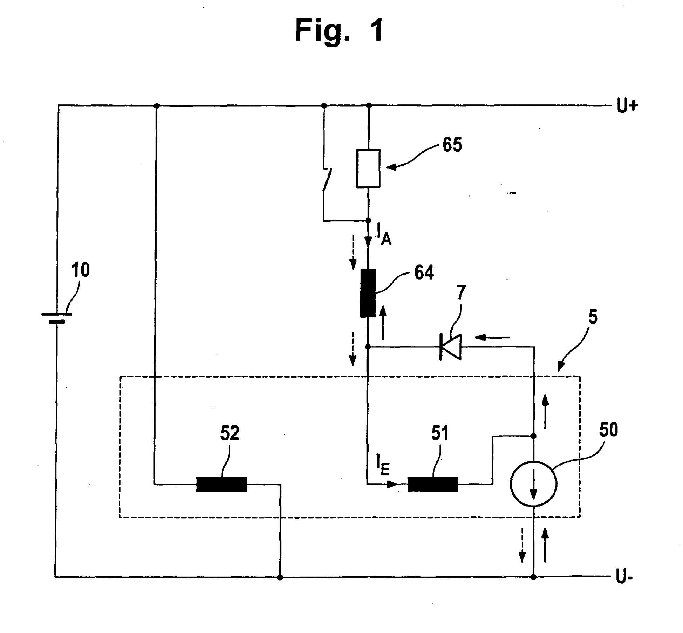

Die Funktionsweise ist in dem elektrischen Ersatzschaltbild Fig. 1 noch einmal anschaulich dargestellt. Im durch die Akkumulatoreinrichtung 10 versorgten Notbetrieb fließt ein konstanter Erregungsstrom durch die Nebenschlusswicklung 52 und bewirkt einen konstanten Fluss durch die Ankerwicklung 50. Weiter fließt ein (im Motorbetrieb positiver) Ankerstrom I_{A} über die Anlasseinrichtung 65, die Motordrossel 64 und die Reihenschlusswicklung 51, wobei die als Freilaufeinrichtung 7 fungierende Diode sperrt, und schließlich durch die Ankerwicklung 50 zum negativen Anschluss U- der Akkumulatoreinrichtung 10. Dieser Stromfluss ist wiederum durch gestrichelte Pfeile dargestellt. Wird der Stellmotor 5 aufgrund von auf die Blätter 3 einwirkenden aerodynamischen Kräften entlastet, so dass der Stellmotor 5 als generatorische Bremse wirkt, so dreht sich die Stromrichtung und der Ankerstrom wird negativ. Dies ist durch die durchgezogenen Pfeile symbolisiert. Für den nun negativen Ankerstrom wirkt die als Freilaufeinrichtung 7 fungierende Diode nicht mehr sperrend, sondern leitend, so dass der Ankerstrom unter Umgehung der Reihenschlusswicklung 51 durch die als Freilaufeinrichtung 7 fungierende Diode geleitet wird. Der Stromfluss durch die Reihenschlusswicklung 51 geht bis auf einen geringen, durch die Schwellenspannung der Diode und den Widerstand der Reihenschlusswicklung 51 bestimmten Wert zurück. Auf die Ankerwicklung 50 wirkt damit nur noch der Fluss ein, der durch die Nebenschlusswicklung 52 erzeugt wird.

Es sei noch einmal darauf hingewiesen, dass die im elektrischen Ersatzschaltbild gemäß Fig. 1 zusätzlich vorgesehene, als Freilaufeinrichtung 7 fungierende Diode üblicherweise bereits vorhanden ist, nämlich als Teil des Gleichrichters 8, der zur Versorgung der Reihenschlusswicklung 51 im wechselstromversorgten Normalbetrieb dient. Dies hat den besonderen Vorteil, dass für die Erfindung kein zusätzliches Bauelement benötigt wird. Gewünschtenfalls können aber selbstverständlich zusätzliche Dioden vorgesehen sein, z. B. in Reihenschaltung zu der als Freilaufeinrichtung fungierenden Diode. Damit kann die Schwellenspannung und so der durch die Reihenschlusswicklung 51 fließende Strom beeinflusst werden.

## Patentansprüche

1. Windenergieanlage umfassend einen Rotor (2) mit verstellbaren Blättern (3), einer Verstelleinrichtung (4) für die Blätter mit einem Stellmotor (5), der mindestens eine Erregungswicklung aufweist, und einem Blattsteuerungsmodul (6), und einem vom Rotor (2) angetriebenen Generator (1), wobei die Verstelleinrichtung (4) einen Normalbetrieb und einen Notbetrieb aufweist, wobei in dem Normalbetrieb der Stellmotor (5) von dem Blattsteuerungsmodul (6) geregelt wird und im Notbetrieb der Stellmotor (5) ungeregelt ist,
**dadurch gekennzeichnet, dass**
die Verstelleinrichtung (4) mit einer Drehmomentschwächungseinrichtung versehen ist, die dazu ausgebildet ist, im Notbetrieb durch Reduktion des magnetischen Flusses in der Erregerwicklung selbsttätig ein Schleppmoment des Stellmotors (5) zu vermindern.

2. Windenergieanlage nach Anspruch 1,
**dadurch gekennzeichnet, dass**
die Drehmomentschwächungseinrichtung dazu ausgebildet ist, einen Erregerstrom (IE) des Stellmotors (5) zu verringern.

3. Windenergieanlage nach Anspruch 1 oder 2,
**dadurch gekennzeichnet, dass**
die Erregungswicklung als Reihenschlusswicklung (51) ausgeführt ist.

4. Windenergieanlage nach einem der vorhergehenden Ansprüche,
**dadurch gekennzeichnet, dass**
eine zweite Erregungswicklung vorzugsweise als Nebenschlusswicklung (52) vorgesehen ist, auf welche die Drehmomentschwächungseinrichtung nicht wirkt.

5. Windenergieanlage nach einem der vorangehenden Ansprüche,
**dadurch gekennzeichnet, dass**
die Drehmomentschwächungseinrichtung als Freilaufeinrichtung (7) ausgebildet ist, die bei geschlepptem Stellmotor (5) die Erregungswicklung überbrückt.

6. Windenergieanlage nach Anspruch 5,
**dadurch gekennzeichnet, dass**
die Freilaufeinrichtung (7) als Ruhestromrelais ausgebildet ist.

7. Windenergieanlage nach Anspruch 5,
**dadurch gekennzeichnet, dass**
die Freilaufeinrichtung (7) eine Diode umfasst.

8. Windenergieanlage nach Anspruch 5,
**dadurch gekennzeichnet, dass**
die Freilaufeinrichtung (7) so ausgebildet ist, dass sie einen Mindeststrom durchlässt.

9. Windenergieanlage nach einem der vorangehenden Ansprüche,
**dadurch gekennzeichnet, dass**
der Erregungsstrom über einen Gleichrichter (8) an die Erregungswicklung geführt ist, wobei eine Speiseleitung (9) für den Notbetrieb zumindest mit einem Pol gleichstromseitig des Gleichrichters (8) angeschlossen ist.

10. Verfahren zum Ändern des Verstellwinkels von Blättern (3) eines Rotors (2) für Windenergieanlagen mit einem Stellmotor (5), der im Normalbetrieb von einem Blattsteuerungsmodul (6) geregelt wird und in einem Notbetrieb ungeregelt betätigt wird, mit den Schritten: Zuführen elektrischer Energie an eine Erregungswicklung des Stellmotors (5) über eine Speiseleitung für den Notbetrieb (9), Fahren der Blätter (3) in eine vorbestimmte Stellung,
**gekennzeichnet durch**
Betätigen einer Drehmomentschwächungseinrichtung im Notbetrieb, die bei geschlepptem Stellmotor (5) **durch** Reduktion des magnetischen Flusses in der Erregerwicklung dessen Schleppmoment verringert.

11. Verfahren nach Anspruch 10,
**gekennzeichnet durch**
Verringern des Erregerstroms (IE) bei geschlepptem Stellmotor (5).

12. Verfahren nach Anspruch 11,
**gekennzeichnet durch**
Überbrücken der Erregungswicklung im Notbetrieb.

13. Verfahren nach einem der Ansprüche 10 bis 12,
**gekennzeichnet durch**
Vorsehen einer zweiten Erregungswicklung, die nicht überbrückt wird.

14. Verfahren nach einem der vorangehenden Ansprüche,
**gekennzeichnet dadurch, dass**
als Drehmomentschwächungseinrichtung eine Freilaufeinrichtung (7) verwendet wird.

15. Verfahren nach Anspruch 14,
**gekennzeichnet durch**
Verwenden eines Ruhestromrelais als Freilaufeinrichtung (7).

16. Verfahren nach Anspruch 14,
**gekennzeichnet durch**
Verwenden einer Diode oder mehrerer in Reihe geschalteter Dioden als Freilaufeinrichtung (7).

17. Verfahren nach Anspruch 14,
**gekennzeichnet durch**
Durchlassen eines Mindeststroms **durch** die Freilaufeinrichtung (7).

18. Verfahren nach einem der Ansprüche 10 bis 17,
**gekennzeichnet durch**
Führen des Erregungsstroms über einen Gleichrichter (8) an die Erregungswicklung, wobei eine Speiseleitung (9) für den Notbetrieb zumindest mit einem Pol gleichstromseitig über den Gleichrichter (8) an die Erregungswicklung geführt wird.

## Claims

1. Wind energy installation having a rotor (2) with variable-pitch blades (3), a pitch-control device (4) for the blades with an actuating motor (5) which has at least one field winding, and a blade control module (6), and a generator (1) which is driven by the rotor (2), with the pitch-control device (4) having a normal mode and an emergency mode, with the actuating motor (5) being regulated by the blade control module (6) in the normal mode and with the actuating motor (5) being unregulated in the emergency mode,
**characterized in that**
the pitch-control device (4) is provided with a torque-reducing device which is designed to automatically reduce any slip torque on the actuating motor (5) by reducing the magnetic flux in the field winding in the emergency mode.

2. Wind energy installation according to Claim 1,
**characterized in that**
the torque-reducing device is designed to reduce a field current (IE) for the actuating motor (5).

3. Wind energy installation according to Claim 1 or 2,
**characterized in that**
the field winding is in the form of a series of winding (51).

4. Wind energy installation according to one of the preceding claims,
**characterized in that**
a second field winding is preferably provided as a shunt winding (52), on which the torque-reducing device does not act.

5. Wind energy installation according to one of the preceding claims,
**characterized in that**
the torque-reducing device is in the form of a freewheeling device (7) which bridges the field winding while the actuating motor (5) is slipping.

6. Wind energy installation according to Claim 5,
**characterized in that**
the freewheeling device (7) is in the form of an idle-current relay.

7. Wind energy installation according to Claim 5,
**characterized in that**
the freewheeling device (7) comprises a diode.

8. Wind energy installation according to Claim 5,
**characterized in that**
the freewheeling device (7) is designed so that it passes a minimum current.

9. Wind energy installation according to one of the preceding claims,
**characterized in that**
the field current is passed via a rectifier (8) to the field winding, with a feed line (9) for the emergency mode being connected at least to one pole on the DC side of the rectifier (8).

10. Method for varying the pitch angle of blades (3) of a rotor (2) for wind energy installations having an actuating motor (5) which is regulated by a blade control module (6) in the normal mode and which is operated unregulated in an emergency mode, having the following steps: Electrical power is supplied to a field winding of the actuating motor (5) via a feed line for the emergency mode (9), and the blades (3) are moved to a predetermined position,
**characterized by**
a torque-reducing device is operated in the emergency mode and reduces the slip torque when the actuating motor (5) is slipping, by reducing the magnetic flux in the field winding.

11. Method according to Claim 10,
**characterized by**
the field current (IE) being reduced when the actuating motor (5) is slipping.

12. Method according to Claim 11,
**characterized by**
the field winding being bridged in the emergency mode.

13. Method according to one of Claims 10 to 12,
**characterized by**
a second field winding, which is not bridged, being provided.

14. Method according to one of the preceding claims,
**characterized in that**
a freewheeling device (7) is used as the torque-reducing device.

15. Method according to Claim 14,
**characterized by**
an idle-current relay being used as the freewheeling device (7).

16. Method according to Claim 14,
**characterized by**
a diode or a plurality of series-connected diodes being used as the freewheeling device (7).

17. Method according to Claim 14,
**characterized by**
a minimum current being passed through the freewheeling device (7).

18. Method according to one of Claims 10 to 17,
**characterized by**
the field current being passed via a rectifier (8) to the field winding, with a feed line (9) for the emergency mode being connected by least to one pole on the DC side via the rectifier (8) to the field winding.

## Revendications

1. Installation éolienne comprenant un rotor (2) avec des pales (3) réglables, un dispositif de réglage (4) pour les pales avec un moteur de commande (5), qui présente un enroulement d'excitation, et un module de commande de pale (6), et un générateur entraîné par le rotor (2), le dispositif de réglage (4) présentant un régime normal et un régime d'urgence, le moteur de commande (5) étant réglé par le module de commande de pale (6) en régime normal et le moteur de commande (5) n'étant pas réglé en régime d'urgence,
**caractérisée en ce que**
le dispositif de réglage (4) est doté d'un dispositif d'affaiblissement de couple qui est conçu pour réduire automatiquement un couple de traînage du moteur de commande (5) en mode d'urgence par réduction du flux magnétique dans l'enroulement excitateur.

2. Installation éolienne selon la revendication 1,
**caractérisée en ce que**
le dispositif d'affaiblissement de couple est conçu pour réduire un courant excitateur (IE) du moteur de commande (5).

3. Installation éolienne selon la revendication 1 ou 2,
**caractérisée en ce que**
l'installation d'excitation est réalisée sous la forme d'un enroulement série (51).

4. Installation éolienne selon l'une quelconque des revendications précédentes,
**caractérisée en ce que**
un second circuit d'excitation est prévu de préférence sous la forme d'un enroulement shunt (52), sur lequel le dispositif d'affaiblissement de couple n'agit pas.

5. Installation éolienne selon l'une quelconque des revendications précédentes,
**caractérisée en ce que**
le dispositif d'affaiblissement est réalisé sous la forme d'un dispositif de roue libre (7), qui shunte l'enroulement d'excitation lorsque le moteur de commande (5) est traîné.

6. Installation éolienne selon la revendication 5,
**caractérisée en ce que**
le dispositif de roue libre (7) est réalisé sous la forme d'un relais de courant de repos.

7. Installation éolienne selon la revendication 5,
**caractérisée en ce que**
le dispositif de roue libre (7) comprend une diode.

8. Installation éolienne selon la revendication 5,
**caractérisée en ce que**
le dispositif de roue libre (7) est réalisé de telle sorte qu'il laisse passer un courant minimum.

9. Installation éolienne selon l'une quelconque des revendications précédentes,
**caractérisée en ce que**
le courant d'excitation est guidé au moyen d'un redresseur (8) sur l'enroulement d'excitation, une ligne d'alimentation (9) pour le régime d'urgence au moins avec un pôle étant raccordée côté courant continu du redresseur (8).

10. Procédé pour modifier l'angle de réglage de pales (3) d'un rotor (2) pour des installations éoliennes avec un moteur de commande (5), qui est réglé en régime normal par un module de commande de pale (6) et est actionné de façon non réglée dans un régime d'urgence, comprenant les étapes suivantes : arrivée d'énergie électrique à un enroulement d'excitation du moteur de commande (5) par une ligne d'alimentation pour le régime d'urgence (9), déplacement des pales (3) dans une position prédéfinie,
**caractérisé par**
l'actionnement d'un dispositif d'affaiblissement de couple dans le régime d'urgence, qui, en cas de moteur de commande (5) traîné, réduit son couple de traînage par réduction du flux magnétique dans l'enroulement excitateur.

11. Procédé selon la revendication 10,
**caractérisé par**
la réduction du courant excitateur (IE) avec le moteur de commande (5) remorqué.

12. Procédé selon la revendication 11,
**caractérisé par**
shuntage de l'enroulement d'excitation en régime d'urgence.

13. Procédé selon l'une quelconque des revendications 10 à 12,
**caractérisé par**
prévision d'un second enroulement d'excitation qui n'est pas shunté.

14. Procédé selon l'une quelconque des revendications précédentes,
**caractérisé en ce que**
un dispositif de roue libre (7) est utilisé comme dispositif d'affaiblissement de couple.

15. Procédé selon la revendication 14,
**caractérisé par**
l'utilisation d'un relais de courant de repos comme dispositif de roue libre (7).

16. Procédé selon la revendication 14,
**caractérisé par**
l'utilisation d'une diode ou de plusieurs diodes montées en série comme dispositif de roue libre (7).

17. Procédé selon la revendication 14,
**caractérisé par**
le passage d'un courant minimum dans le dispositif de roue libre (7).

18. Procédé selon l'une quelconque des revendications précédentes,
**caractérisé en ce que**
le guidage du courant excitateur par un redresseur (8) sur l'enroulement excitateur, une ligne d'alimentation (9) pour le régime d'urgence au moins avec un pôle étant guidée côté courant continu par le redresseur (8) sur l'enroulement d'excitation.
